(19) Europäisches Patentamt
European Patent Office
Office européen des brevets

(11) Publication number: **0 204 771 B1**

(12) **EUROPEAN PATENT SPECIFICATION published in accordance with Art. 158(3) EPC**

(45) Date of publication of patent specification: **03.07.91**

(51) Int. Cl.[5]: **C08L 63/00**, C08G 65/00, C08G 59/44, C08G 59/40, C08G 59/00, C08F 283/00

(21) Application number: **85906135.0**

(22) Date of filing: **26.11.85**

(86) International application number: **PCT/US85/02330**

(87) International publication number: **WO 86/03507 (19.06.86 86/13)**

(54) **THERMALLY STABLE THERMOPLASTIC RESIN.**

(30) Priority: **04.12.84 US 677781**
**25.03.85 US 715305**

(43) Date of publication of application: **17.12.86 Bulletin 86/51**

(45) Publication of the grant of the patent: **03.07.91 Bulletin 91/27**

(84) Designated Contracting States: **AT BE CH DE FR GB IT LI NL SE**

(56) References cited:
**CH-A- 398 082**
**FR-A- 2 261 295**
**FR-A- 2 495 167**
**GB-A- 2 007 672**
**US-A- 2 928 794**
**US-A- 3 424 817**
**US-A- 4 132 706**
**US-A- 4 354 015**
**US-A- 4 405 766**
**CH-A- 443 342**
**FR-A- 2 352 326**
**FR-A- 2 531 091**
**US-A- 2 908 664**
**US-A- 3 377 406**
**US-A- 4 029 621**
**US-A- 4 338 242**
**US-A- 4 358 578**

(73) Proprietor: **THE DOW CHEMICAL COMPANY**
**2030 Dow Center Abbott Road P.O. Box 1967**
**Midland Michigan 48640-1967(US)**

(72) Inventor: **CAVITT, Michael, B.**
**303 South Yaupon**
**Lake Jackson, TX 77566(US)**
Inventor: **BEASLEY, Christopher, V.**
**1113 Holley Court, No. 309**
**Oak Park, IL 60301(US)**

(74) Representative: **Sternagel, Hans-Günther, Dr. et al**
**Patentanwälte Dr. Michael Hann Dr. H.-G. Sternagel Sander Aue 30**
**W-5060 Bergisch Gladbach 2(DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).



Rank Xerox (UK) Business Services

## Description

The present invention concerns thermoplastic resins and coatings prepared therefrom.

Thermoplastic (non-thermoset) epoxy resins have been employed in the formulation of highway, pavement, marking paints as disclosed by J. M. Dale in DEVELOPMENT OF LANE DELINEATION WITH IMPROVED DURABILITY, Report No. FHWA-RD-75-70, July 1975. The paint formulations are maintained at elevated temperatures, about 450° F (232° C), during application. While they provide an excellent highway marking paint in terms of abrasive resistance, they are deficient in terms of applicability since they exhibit a substantial increase in viscosity while being maintained at the application temperature.

FR-A-2,531,091 refers to a four-component system including (1) a dihydrid phenol, (2) a two functional epoxy resin, (3) a monofunctional epoxy or phenolic compound, and (4) a branching agent that is greater than two functional epoxy resin material such as a triglycidyl p-aminphenol. On the contrary the resin of the present invention requires three reactants and not four as disclosed in the cited reference. The present composition does not contain a branching agent, moreover the composition cannot contain a branching agent having nitrogen which can lead to a colour problem in the final product because of oxydation at high temperatures.

Also, the four-component system taught by the cited reference does not teach a thermally stable product and which does not have a viscosity increase at 232° C. The table in the present specification clearly shows that the viscosity stability of the resin composition according to the present invention is greater than for other prior art products. The four-component system of the cited reference has a viscosity stability problem at the temperature specified before. The viscosity of the products disclosed in the cited reference is measured at room temperature. That means that this is a liquid product. On the contrary, the present invention refers to a product which is solid at room temperature.

GB-A-2,007,672 teaches that 50 percent to 100 percent of the secondary hydroxyl groups along the back-bone of the epoxy resin are reacted with a monofunctional isocyanate (see claim 1, line 22). The resulting resin from the disclosed structure illustrates that a large amount of epoxy groups remain in the structure as taught in Table 1.

The resin of said reference has a viscosity of no greater than 20 Pas at 25° C.

On the contrary the resin according to the present invention does not have residual epoxy resin groups. The epoxy resin groups are kept with the monofunctional isocyanate, whereas the cited reference does not keep the epoxy groups shown in the chemical structure disclosed in said reference.

Furthermore, the known resin is liquid, whereas the present invention provides a resin composition which is solid at room temperature.

The present invention provides a thermoplastic resin which exhibits a much reduced viscosity increase at elevated temperatures, i.e. more stable.

The present invention pertains to a thermally stable, thermoplastic resin prepared by reacting in the presence of an effective quantity of a suitable catalyst

(A) at least one epoxy resin having an average of more than one vicinal epoxy group per molecule;

(B) at least one polyhydric phenol; and

(C) at least one capping agent for the epoxy groups of components selected from monohydric phenols and alcohols, monocarboxylic acids and anhydrides thereof, aliphatic and aromatic mono-secondary amines, mono-thiols, mono-isocyanates, water and combinations thereof;

wherein components (A), (B) and (C) are reacted in quantities which provide an equivalent ratio of component (B) to component (A) of from 03:1 to 0.95:1 and an equivalent ratio of component (C) to component (A) of from 0.87:1 to 1.1:1 and wherein the equivalent ratio of components (B + C) to component (A) is from 1.17:1 to 1.96:1.

A preferred embodiment of the present invention provides a resin composition wherein

(i) the epoxy groups contained in component (A) are glycidyl ether groups;

(ii) the equivalent ratio of component (B) to component (A) is from 0.3:1 to 0.9:1;

(iii) the equivalent ratio of component (C) to component (A) is from 0.93:1 to 1.05:1; and

(iv) the equivalent ratio of components (B + C) to component (A) is from 1.23:1 to 1,95:1.

A further preferred embodiment of the present invention provides a resin composition wherein

(i) the equivalent ratio of component (B) to component (A) is from 0.45:1 to 0.85:1;

(ii) the equivalent ratio of component (C) to component (A) is from 0.95:1 to 1:1; and

(iii) the equivalent ratio of components (B + C) to component (A) is from 1.40:1 to 1.85:1.

The thermoplastic resin of the present invention is suitable for incorporation in a paint formulation comprising

(A) the aforementioned thermally stable thermoplastic resin; and

(B) at least one of

(1) one or more pigments or dyes; and

(2) one or more fillers.

Suitable epoxy resins of component (A) which can be employed in the process of the present invention include, for example, those represented by the formulas

I.

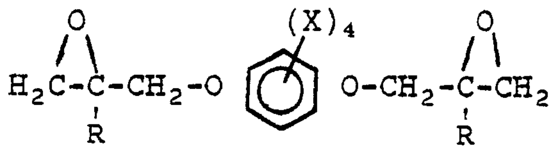

II. 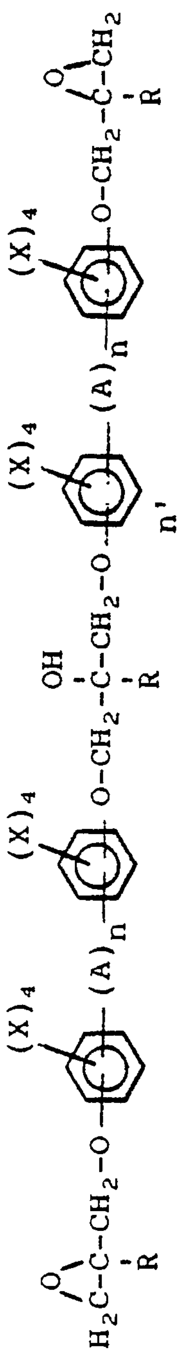

III. 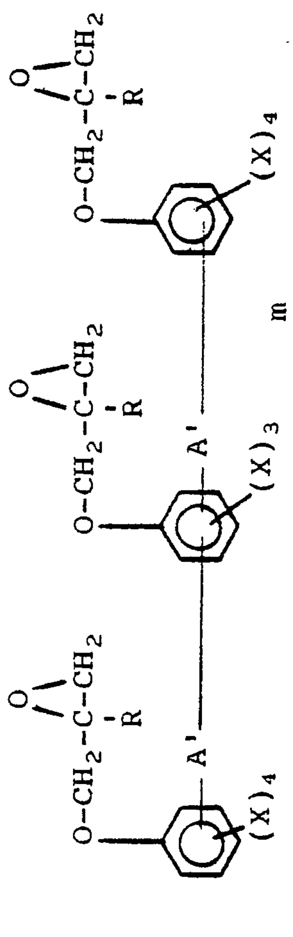

IV. 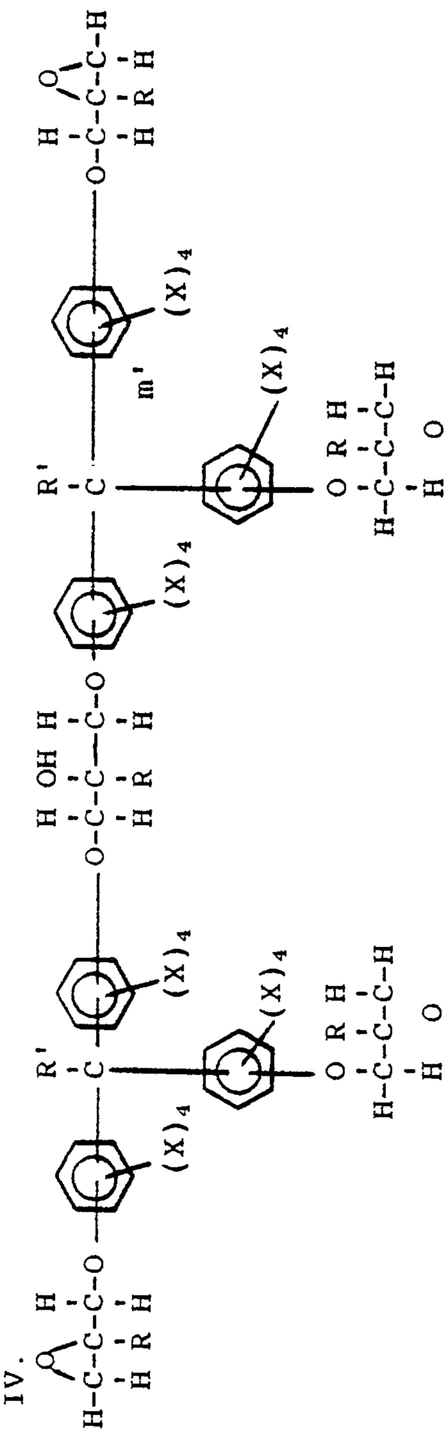

wherein each A is independently a divalent hydrocarbyl group having from 1 to 10, preferably from 1 to 6 carbon atoms, -S-, -S-S-,

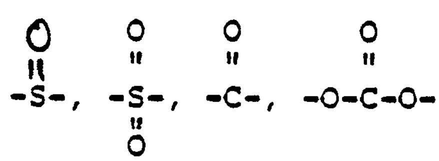

or -O-; each A' is independently a divalent hydrocarbyl group having from 1 to 10, preferably from 1 to 6

carbon atoms; each R is independently hydrogen or a hydrocarbyl group having from 1 to 4 carbon atoms; R' is hydrogen or a hydrocarbyl group having from 1 to 10, preferably from 1 to 6 carbon atoms; each X is independently hydrogen, a halogen, preferably chlorine or bromine, or a hydrocarbyl group having from 1 to 12 carbon atoms; n has a value of zero or 1; n' has an average value of from zero to 15, preferably from zero to 11.5; m has an average value of from 0.001 to 6, preferably from 0.1 to 3; and m' has an average value of from zero to 4, preferably from 0.1 to 2.

Particularly suitable epoxy resins include, for example, the glycidyl ethers of polyhydric phenols such as resorcinol, catechol, hydroquinone, bisphenol A, bisphenol F, bisphenol K, tris-hydroxyphenyl methane, and mixtures thereof.

Suitable polyhydric phenolic compounds of component (B) which can be employed herein include, for example, those represented by the formulas

V.

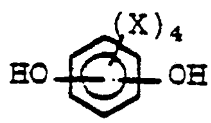

VI.

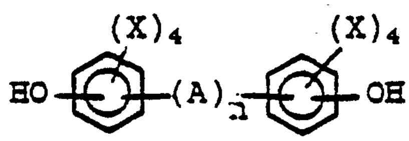

VII.

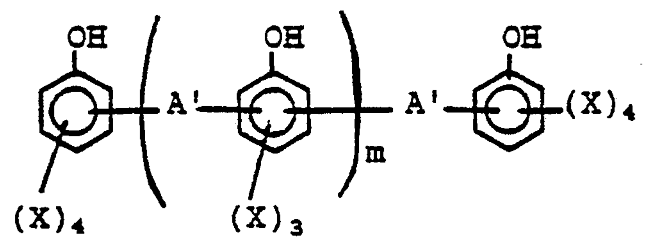

VIII.

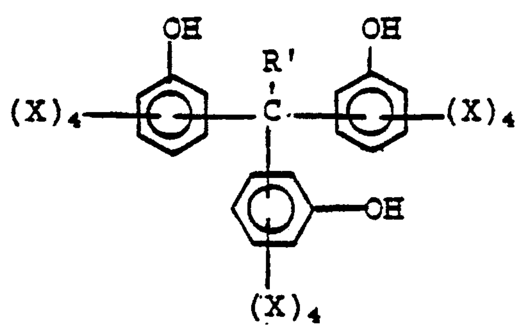

wherein A, A', R', X, n and m are as hereinbefore defined.

Particularly suitable polyhydric phenolic materials include, for example, resorcinol, catechol, hydroquinone, bisphenol A, bisphenol F, bisphenol K, tris-hydroxyphenyl methane, and mixtures thereof.

Suitable monohydric phenolic compounds refered to as component C include, for example, those represented by the formula

IX.

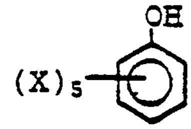

and each X is as hereinbefore defined.

Particularly suitable monohydric phenolic materials include, for example, phenol, alkylphenols, such as nonylphenol and t-butylphenol, cresol, and mixtures thereof.

Suitable monohydric alcohols which can be employed herein include, for example, methanol, ethanol, propanol, isopropanol, butanol, pentanol, hexanol, ethylene glycol monomethyl ether, propylene glycol monomethyl ether, ethylene glycol monoethyl ether, propylene glycol monoethyl ether, and combinations thereof.

Suitable monocarboxylic acids which can be employed herein include, for example, acetic acid, propionic acid, butyric acid, valeric acid, caproic acid, caprylic acid, capric acid, lauric acid, myristic acid, palmitic acid, stearic acid, oleic acid, phenylacetic acid, toluic acid, and combinations thereof.

Suitable anhydrides of monocarboxylic acids which can be employed herein include, for example, acetic anhydride, propionic anhydride, butyric anhydride, valeric anhydride, and combinations thereof.

Suitable mono-secondary amines which can be employed herein include, for example, dimethyl amine, diethyl amine, methyl ethyl amine, dibutyl amine, methyl butyl amine, ethyl butyl amine, and combinations thereof.

Suitable mono-thiols which can be employed herein include, for example, propanthiol, butanethiol, pentanethiol, hexanethiol, dodecanethiol, thiocresol, and combinations thereof.

Suitable mono-isocyanates which can be employed herein include, for example, ethyl isocyanate, propyl isocyanate, butyl isocyanate, phenyl isocyanate, tolyl isocyanate, and combinations thereof.

Suitable catalysts for effecting the reaction between the epoxy resin and the phenolic hydroxyl-containing materials include, for example, those disclosed in U.S. Pat. Nos. 3,306,872; 3,341,580; 3,379,684; 3,477,990; 3,547,881; 3,637,590; 3,843,605; 3,948,855; 3,956,237; 4,048,141; 4,093,650; 4,131,633; 4,132,706; 4,171,420; 4,177,216 and 4,366,295.

Particularly suitable catalysts are those quaternary phosphonium and ammonium compounds such as, for example, ethyltriphenylphosphonium chloride, ethyltriphenylphosphonium bromide, ethyltriphenylphosphonium iodide, ethyltriphenylphosphonium acetate, ethyltriphenylphosphonium diacetate (ethyltriphenylphosphonium acetate•acetic acid complex), tetrabutylphosphonium chloride, tetrabutylphosphonium bromide, tetrabutylphosphonium iodide, tetrabutylphosphonium acetate, tetrabutylphosphonium diacetate (tetrabutylphosphonium acetate•acetic acid complex), butyltriphenylphosphonium tetrabromobisphenate, butyltriphenylphosphonium bisphenate, butyltriphenylphosphonium bicarbonate, benzyltrimethylammonium chloride and tetramethylammonium hydroxide.

Other suitable catalysts include tertiary amines such as, for example, triethylamine, tripropylamine, tributylamine, 2-methylimidazole, benzyldimethylamine, N-methyl morpholine, and mixtures thereof.

Suitable pigments which can be employed herein include any which will provide the coating with the desired color such as, for example, titanium dioxide, lead chromate, zinc chromate, chrome green, pthalocyamine green and blue, iron oxide, and combinations thereof.

Suitable fillers which can be employed herein include, for example, calcium carbonate, talc, glass beads, powdered or flaked zinc or alumina, powdered or flaked glass, colloidal silica, and combinations thereof.

The following examples are illustrative of the present invention, but are not to be construed as to limiting the scope thereof in any manner.

## EXAMPLE 1

### A. Preparation of Capped Epoxy Resin

To a reaction vessel equipped with a means for stirring and temperature control was added 37.1 lbs (16.8 kg, 10.2 gram epoxy equiv.) of a diglycidyl ether of bisphenol A having an average epoxide equivalent weight (EEW) of 1646, 18 lbs (8.2 kg, 43.8 gram epoxy equivalents) of a diglycidyl ether of bisphenol A having an average EEW of 187, 23 lbs (10.4 kg, 47.3 gram hydroxyl equiv.) of nonyl phenol and 0.077 lbs (0.169 kg) of a 70 percent solution of ethyltriphenyl phosphonium acetate•acetic acid complex in methanol. The mixture was heated to 160 °C at a rate of 1.5 °C/min. (0.025 °C/s) and maintained thereat for 2 hours

(7200 s). The resultant product was a colorless to pale yellow resin, solid at room temperature.

B. Preparation of Traffic Marking Paint

A mixture was prepared at 200 °C of the following components:

1. 100 parts by weight of the resin from (A) above
2. 20 parts by weight of $TiO_2$
3. 20 parts by weight of $CaCO_3$
4. 28 parts by weight of 200 mesh (0.074 mm sieve opening) glass beads

Components 1, 2 and 3 were mixed under high shear conditions. Component 4 was mixed at low speeds.

The properties of the traffic paint formulation are given in the following Table.

C.

For comparative purposes, a similar paint formulation was prepared from an epoxy resin mixture without nonyl phenol capping. The formulation was as follows:

1. 40 parts by weight of a diglycidyl ether of bisphenol A (DGEBA) having an epoxy equivalent weight (EEW) between 186 and 192
2. 60 parts by weight of a DGEBA having an EEW between 1600 and 2000
3. 20 parts by weight of $TiO_2$
4. 20 parts by weight of $CaCO_3$
5. 28 parts by weight of 200 mesh (0.074 mm sieve opening) glass beads

The properties are given in the following Table.

TABLE

| | Formulation 1-B Present Invention | Formulation 1-C Comparative |
|---|---|---|
| Mettler Softening Point, °C | 89 | 77 |
| Cold flow at 25°C | No | Yes |
| Initial Viscosity @ 450°F (232°C), cps/pa·s | 505/0.505 | 480/0.480 |
| Viscosity after 8 hours (28800 s) at 450°F (232°C), cps/pa·s | 510/0.51 | 1500/1.5 |
| Condition after 24 hours (86400 s) at 450°F (232°C) | slight yellowing | gelled, brown |

EXAMPLE 2

A. Preparation of Non-Capped Epoxy Resin Blend (Epoxy Resin Blend)

To a reaction vessel equipped with a means for stirring, nitrogen purge and temperature control was added 725.2 g (3.9 epoxy equiv.) of a diglycidyl ether of bisphenol A having an average epoxide equivalent weight (EEW) of 186 and 374.8 g (3.29 equiv.) of bisphenol A. The mixture was then heated to 90 °C at which time 1.69 g (0.003 mole) of a 70 percent solution of ethyltriphenyl phosphonium acetate•acetic acid complex in methanol was added. The temperature was increased to 150 °C and then the reaction mass exothermed to 206 °C. The temperature was maintained at 190 °C for 1 hour (3600 s). The percent epoxide

was 2.48. To this material was added 528.4 g (2.84 epoxy equiv.) of a diglycidyl ether of bisphenol A having an average EEW of 186. The temperature of the mixture was decreased to 150° C. This product had a percent epoxide of 9.1 (473 EEW).

B. Preparation of Capped Epoxy Resin

To a reaction vessel equipped with a means for stirring and temperature control was added 180 g (0.38 epoxy equiv.) of epoxy resin blend prepared in A above and 76.2 g (0.38 mole) of lauric acid. The mixture was heated to 90° C whereupon 0.21 g (0.0004 mole) of a 70 percent solution of ethyltriphenyl phosphonium acetate•acetic acid complex in methanol was added. The temperature was increased to 156° C and maintained at about 155° C for 1.5 hours (5400 s). The product was dried in a vacuum oven at 160° C for 2 hours (7200 s). The product had a viscosity of 74.5 cps (0.0745 pa•s) at 450° F (232° C) and a softening point of 60.1° C.

EXAMPLE 3

To a reaction vessel equipped with a means for stirring and temperature control was added 150 g (0.32 epoxy equiv.) of epoxy resin blend prepared in Example 2A and 100 g (1.35 mole) of n-butanol. The mixture was heated to 50° C whereupon 0.3 g (0.002 mole) of boron trifluoride etherate was added. The temperature was increased to 60° C and maintained between 60° and 63° C for 3.17 hours (11412 s), heated to 200° C and vacuum stripped for 2.08 hours (7488 s). The product was dried in a vacuum oven at 160° C for 2 hours (7200 s). The product had a viscosity of 189.5 cps (0.1895 pa•s) at 450° F (232° C) and a softening point of 78° C.

EXAMPLE 4

To a high pressure reaction vessel equipped with a means for stirring, nitrogen purge and temperature control was added 200 g (0.42 epoxy equiv.) of epoxy resin blend prepared in Example 2A, 200 g (2.77 moles) of methyl ethyl ketone, 43 g (2.39 moles) of water, 1.7 g (0.003 mole) of a 70 percent solution of ethyltriphenyl phosponium acetate•acetic acid complex in methanol and 2.09 g (0.016 mole) of oxalic acid•$2H_2O$. Reactor was purged with nitrogen and then pressure increased to 80 psig (552 kPa gage). The reactor temperature was increased to 135° C and maintained for about 4.5 hours (16200 s) then the temperature was increased to 145° C and maintained for 5 hours (18,000 s). The excess volatiles were removed in the reaction vessel at a temperature of about 200° C for about 0.25 hour (900 s). The product was dried in a vacuum oven at 160° C for 2 hours (7200 s). The product had a viscosity of 362 cps (0.362 pa•s) at 450° F (232° C) and a softening point of 106.6° C.

EXAMPLE 5

To a reaction vessel equipped with a means for stirring and temperature control was added 50 g of propylene glycol monomethyl ether acetate and 13.6 g (0.105 mole) of dibutylamine. Over a period of 1 hour (3600 s) added 100 g (0.106 epoxy equiv.) of a 50 percent solution of epoxy resin blend prepared in Example 2A. The temperature was increased to 140° C and maintained for 2 hours (7200 s). The temperature was increased to about 200° C for about 0.25 hour (900 s) to remove the solvent. The product was dried in a vacuum oven at 160° C for 2 hours (7200 s). The product had a viscosity of 100.5 cps (0.1005 pa•s) at 450° F (232° C) and a softening point of 72.4° C.

EXAMPLE 6

To a reaction vessel equipped with a means for stirring and temperature control was added 97 g of propylene glycol monomethyl ether acetate, 8 g (0.078 mole) of acetic anhydride, 70 g (0.074 epoxy equiv.) of a 50 percent solution of epoxy resin blend prepared in Example 2A in propylene glycol monomethyl ether acetate and 0.25 g (0.0009 mole) of a 70 percent solution of ethyltriphenyl phosphonium acetate•acetic acid complex in methanol. The temperature was increased to 120° C and maintained for 5.2 hours (18,720 s). A portion of the solvent was removed by heating at 145° C for about 0.5 hour (1800 s). The resultant material was then placed on a hot plate for 1 hour (3600 s) at 206° C. The product was dried in a vacuum oven at 160° C for 2 hours (7200 s). The product had a viscosity of 154 cps (0.154 pa•s) at 450° F (232° C) and a softening point of 79.5° C.

EXAMPLE 7

To a reaction vessel equipped with a means for stirring and temperature control was added 84 g of Dowanol PM acetate, 8.5 g (0.082 mole) of 1-pentanethiol, 70 g (0.074 epoxy equiv.) of a 50 percent solution of epoxy resin blend prepared in Example 2A in propylene glycol monomethyl ether acetate and 0.25 g (0.0009 mole) of a 70 percent solution of ethyltriphenyl phosphonium acetate•acetic acid complex in methanol. The temperature was increased to 100 °C and maintained for 3.55 hours (12,780 s). An additional 2 g (0.019 mole) of 1-pentanethiol and 0.25 g (0.0009 mole) of ethyltriphenyl phosphonium acetate•acetic acid complex solution was added. After 2.5 hours (9000 s) an additional 0.25 g (0.0009 mole) of ethyltriphenyl phosphonium acetate•acetic acid complex solution was added. After 1 hour (3600 s) an additional 2 g (0.019 mole) of 1-pentanethiol and 0.25 g (0.0009 mole) of ethyltriphenyl phosphonium acetate•acetic acid complex was added. The temperature was maintained for 1 hour (3600 s) at 100 °C and then increased to about 150 °C for about 1 hour (3600 s) to remove solvent. The product was dried in a vacuum oven at 160 °C for 2 hours (7200 s). The product had a viscosity of 119 cps (0.119 pa•s) at 450 °F (232 °C) and a softening point of 72.4 °C.

EXAMPLE 8

To a reaction vessel equipped with a means for stirring, nitrogen purge and temperature control was added 200 g (0.423 epoxy equivalent) of epoxy resin blend prepared in Example 2A, 49.5 g (0.416 mole) of phenyl isocyanate. The temperature was maintained between 130 ° and 145 °C. The phenyl isocyanate addition took 0.73 hour (2628 s). After 0.77 hour (2772 s), 0.75 g (0.0022 mole) tetrabutylphosphonium bromide in 2.5 g of methanol was added. The temperature was increased to 155 °C and maintained between 155 ° and 160 °C for 6.75 hours (24,300 s). The product was dried in a vacuum oven at 160 °C for 2 hours (7200 s). The product had a viscosity of 670 cps (0.67 pa•s) at 450 °F (232 °C) and a softening point of 123.5 °C.

EXAMPLE 9

To a reaction vessel equipped with a means for stirring, condensing and temperature control was added 50 g (0.106 epoxy equivalent) of epoxy resin blend prepared in Example 2A and 150 g (1.531 mole) of cyclohexanone. The temperature was increased to 90 °C to dissolve the epoxy resin blend then cooled to 45 °C, whereupon 12 g (0.375 mole) of methanol was added. The temperature was decreased to 33 °C in 0.75 hour (2700 s) then 12.2 g (0.103 mole) of phenyl isocyanate was added. The temperature was increased to 45 °C, then 0.12 g (0.0004 mole) of tetrabutylphosphonium bromide in 1 g (0.031 mole) of methanol was added. The temperature was increased to 145 °C and maintained for 2.17 hours (7812 s). Then solvent was removed at 150 °C for 0.75 hour (2700 s). The resultant material was placed on a hot plate for 1.5 hours (5400 s) at 208 °C. The product was dried in a vacuum oven at 160 °C for 2 hours (7200 s). The product had a viscosity of 2520 cps (2.52 pa•s) at 450 °F (232 °C) and a softening point of 128.3 °C.

The uncapped epoxy resin blend of Example 2A and the capped epoxy resins prepared in Examples 5, 6 and 8 were subjected to a thermal stability test. The results are given in the following Table.

THERMAL STABILITY TEST

Test Temperature 450°F (232°C)

| EPOXY RESIN | TIME AT 450°F (232°C) | VISCOSITY cps/pa·s |
|---|---|---|
| Epoxy Resin Blend | Initial | 211/0.211 |
| | 8 hours (28,800 s) | 495/0.495 |
| Example 5 | Initial | 100.5/0.1005 |
| | 7.5 hours (27,000 s) | 133.5/0.1335 |
| Example 6 | Initial | 154/0.154 |
| | 7 hours (25,200 s) | 173/0.173 |
| Example 8 | Initial | 670/0.670 |
| | 8 hours (28,800 s) | 684/0.684 |

## Claims

1. A thermally stable, thermoplastic resin prepared by reacting in the presence of an effective quantity of a suitable catalyst
   (A) at least one epoxy resin having an average of more than one vicinal epoxy group per molecule;
   (B) at least one polyhydric phenol; and
   (C) at least one capping agent for the epoxy groups of components selected from monohydric phenols and alcohols, monocarboxylic acids and anhydrides thereof, aliphatic and aromatic mono-secondary amines, mono-thiols, mono-isocyanates, water and combinations thereof;
   wherein components (A), (B) and (C) are reacted in quantities which provide an equivalent ratio of component (B) to component (A) of from 03:1 to 0.95:1 and an equivalent ratio of component (C) to component (A) of from 0.87:1 to 1.1:1 and wherein the equivalent ratio of components (B+C) to component (A) is from 1.17:1 to 1.96:1.

2. A resin composition of Claim 1 wherein
   (i) the epoxy groups contained in component (A) are glycidyl ether groups;
   (ii) the equivalent ratio of component (B) to component (A) is from 0.3:1 to 0.9:1;
   (iii) the equivalent ratio of component (C) to component (A) is from 0.93:1 to 1.05:1; and
   (iv) the equivalent ratio of components (B+C) to component (A) is from 1.23:1 to 1.95:1.

3. A resin composition of Claim 2 wherein
   (i) the equivalent ratio of component (B) to component (A) is from 0.45:1 to 0.85:1;
   (ii) the equivalent ratio of component (C) to component (A) is from 0.95:1 to 1:1; and
   (iii) the equivalent ratio of components (B+C) to component (A) is from 1.40:1 to 1.85:1.

4. A resin composition of Claim 1 wherein
   (i) component (A) is an epoxy resin or a mixture of epoxy resins represented by the following formulas (I), (II), (III) or IV):

Formula (I)

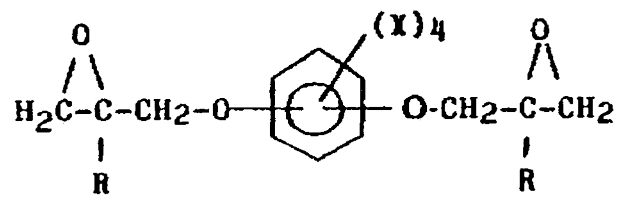

Formula (II)

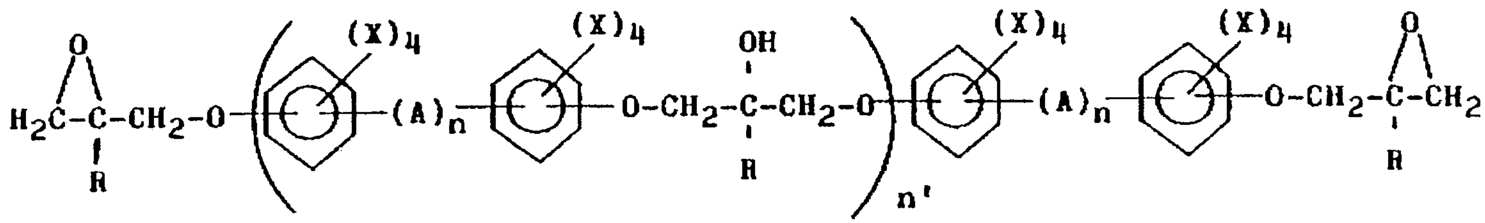

Formula (III)

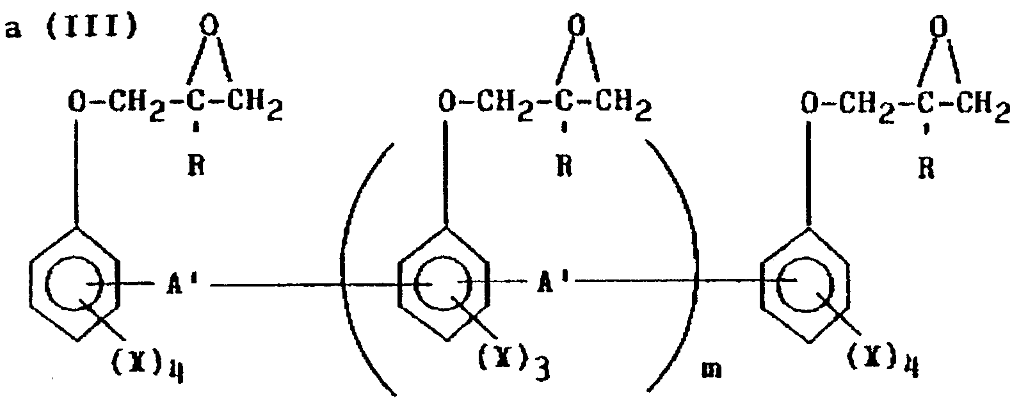

Formula (IV)

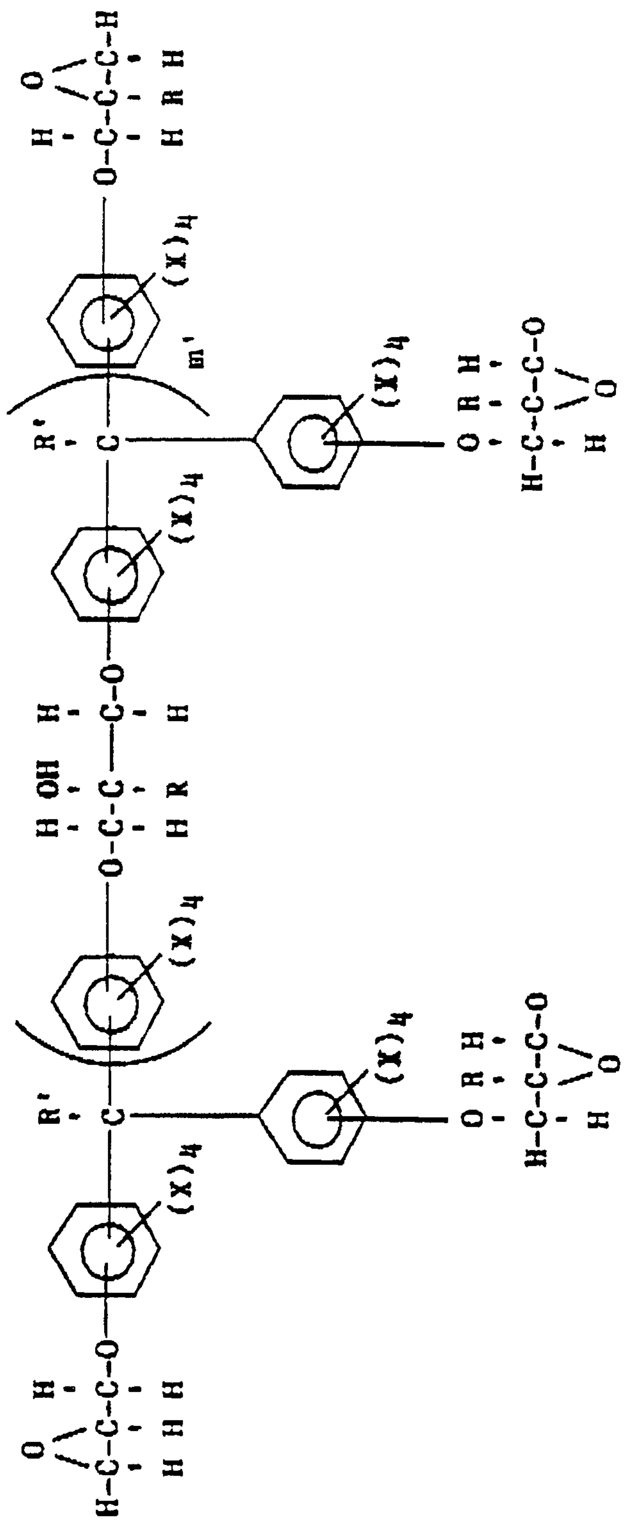

wherein each A is independently a divalent hydrocarbyl group having from 1 to 10 carbon atoms,

$$-S-,\ -S-S-,\ -\overset{O}{\overset{\|}{S}}-,\ -\overset{O}{\overset{\|}{\underset{\underset{O}{\|}}{S}}}-,\ -\overset{O}{\overset{\|}{C}}-,\ -O-\overset{O}{\overset{\|}{C}}-O-\ \text{or}\ -O-;$$

each A' is independently a divalent hydrocarbyl group having from 1 to 10; each R is independently hydrogen or a hydrocarbyl group having from 1 to 4 carbon atoms; R' is hydrogen or a hydrocarbyl group having from 1 to 10 carbon atoms; each X is independently hydrogen, a halogen, or a hydrocarbyl group having from 1 to 12 carbon atoms; n has a value of zero or 1; n' has an average value of from zero to 15; m has an average value of from 0.001 to 6; and m' has an average value from 0 to 4;

(ii) component (B) is a polyhydric phenolic compound or mixture of such compounds represented by the following formulas (V), (VI), (VII) or (VIII):

Formula (V)

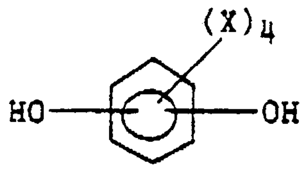

Formula (VI)

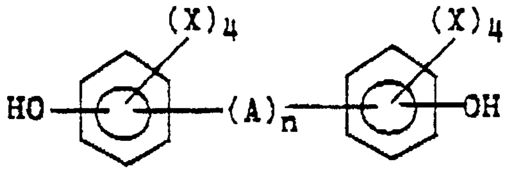

Formula (VII)

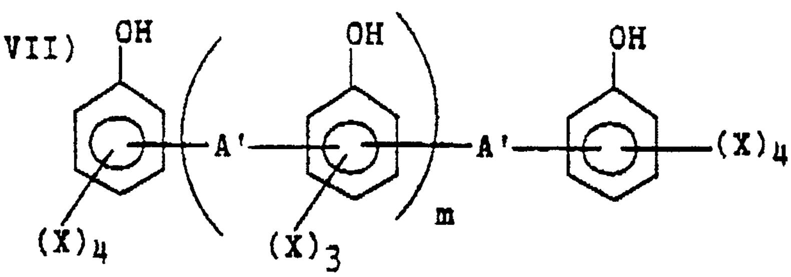

Formula (VIII)

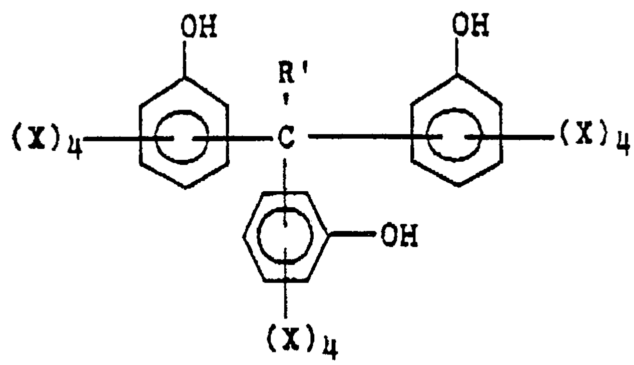

wherein A, A', R', X, n and m are as defined above; and

(iii) component (C) is selected from monohydric phenolic compounds represented by the following formula (IX):

Formula (IX)

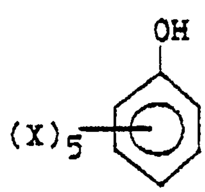

wherein each X is as defined above, aliphatic alcohols, monocarboxylic acids, water or combinations thereof.

5. A resin composition of Claim 4 wherein
(i) component (A) is one or more epoxy resins represented by the following formula (II):

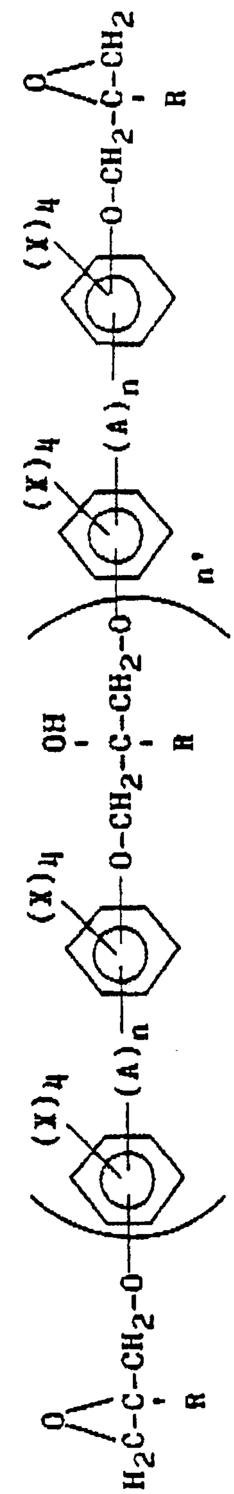

Formula (II)

wherein A is a divalent hydrocarbon group having from 1 to 10 carbon atoms, each X is hydrogen or a halogen atom, n has a value of 1 and n' has an average value from 0.035 to 15.

(ii) component (B) is one or more polyhydric phenolic compounds represented by the following formula (VI)

Formula (VI)

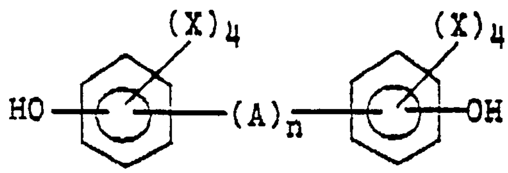

wherein n, A and X are as defined in claim 4 and

(iii) component (C) is selected from nonyl phenol, n-butyl alcohol, lauric acid, water or combinations thereof.

**6.** A resin composition of Claim 4 wherein
(i) component (A) is a mixture of epoxy resins wherein n has a value of zero or 1 and wherein n' has an average value of from 2 to 15;
(ii) component (B) is bisphenol A; and
(iii) component (C) is nonyl phenol.

**7.** A paint formulation comprising
(A) a thermally stable resin of Claim 1; and
(B) at least one of
(1) one or more pigments or dyes; and
(2) one or more fillers.

**Revendications**

**1.** Résine thermoplastique thermostable, préparée par réaction, en présence d'une quantité efficace d'un catalyseur approprié, de :
(A) au moins une résine époxy contenant en moyenne, par molécule, plus d'un groupe époxy vicinal,
(B) au moins un phénol polyhydroxylé, et
(C) au moins un agent de coiffage pour les groupes époxy, choisi parmi les phénols et alcools monohydroxylés, les acides monocarboxyliques et leurs anhydrides, les monoamines secondaires, les monothiols, les monoisocyanates, aliphatiques et aromatiques, l'eau, et leurs combinaisons,
les composants (A), (B) et (C) étant mis à réagir en des quantités qui donnent un rapport en équivalent du composant (B) au composant (A) de 0,3:1 à 0,95:1 et un rapport en équivalent du composant (C) au composant (A) de 0,87:1 à 1,1:1, le rapport en équivalent des composants (B + C) au composant (A) étant de 1,17:1 à 1,96:1.

**2.** Composition de résine selon la revendication 1, dans laquelle :
(i) les groupes époxy contenus dans le composant (A) sont des groupes glycidyléther,
(ii) le rapport en équivalent du composant (B) au composant (A) est de 0,3:1 à 0,9:1,
(iii) le rapport en équivalent du composant (C) au composant (A) est de 0,93:1 à 1,05:1, et
(iv) le rapport en équivalent des composants (B + C) au composant (A) est de 1,23:1 à 1,95:1.

**3.** Composition de résine selon la revendication 2, dans laquelle :
(i) le rapport en équivalent du composant (B) au composant (A) est de 0,45:1 à 0,85:1,
(ii) le rapport en équivalent du composant (C) au composant (A) est de 0,95:1 à 1:1, et
(iii) le rapport en équivalent des composants (B + C) au composant (A) est de 1,40:1 à 1,85:1.

**4.** Composition de résine selon la revendication 1 dans laquelle :
(i) le composant (A) est une résine époxy ou un mélange de résines époxy, représentée(s) par les

formules (I), (II), (III) ou (IV) suivantes :

Formule (I)

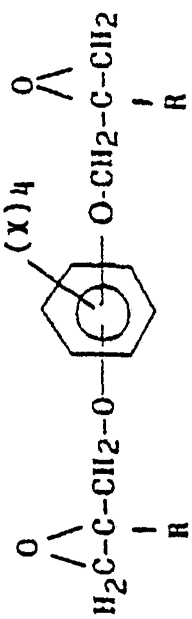

Formule (II)

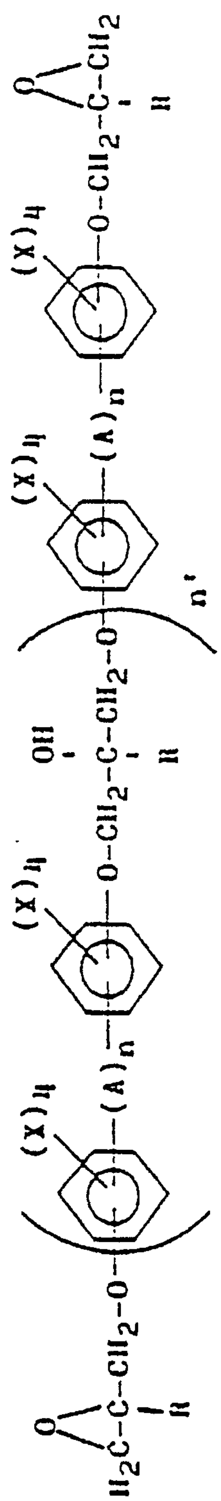

Formule (III)

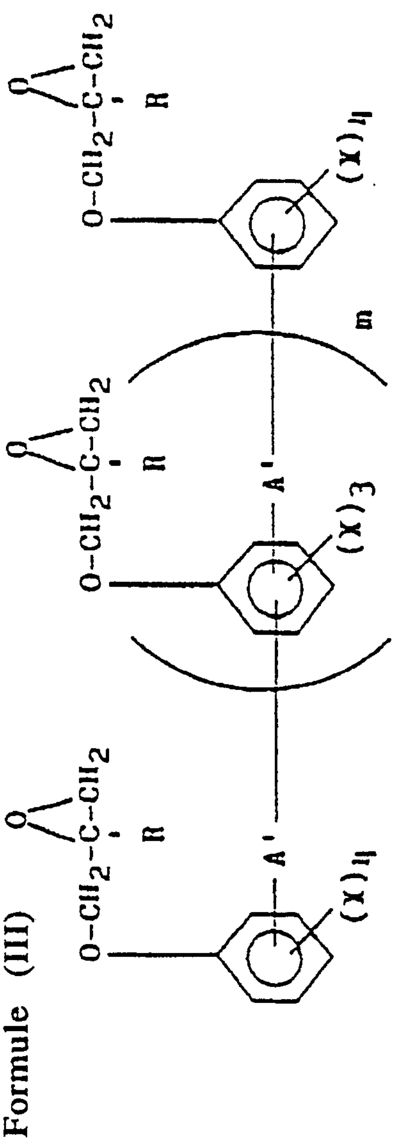

Formule (IV)

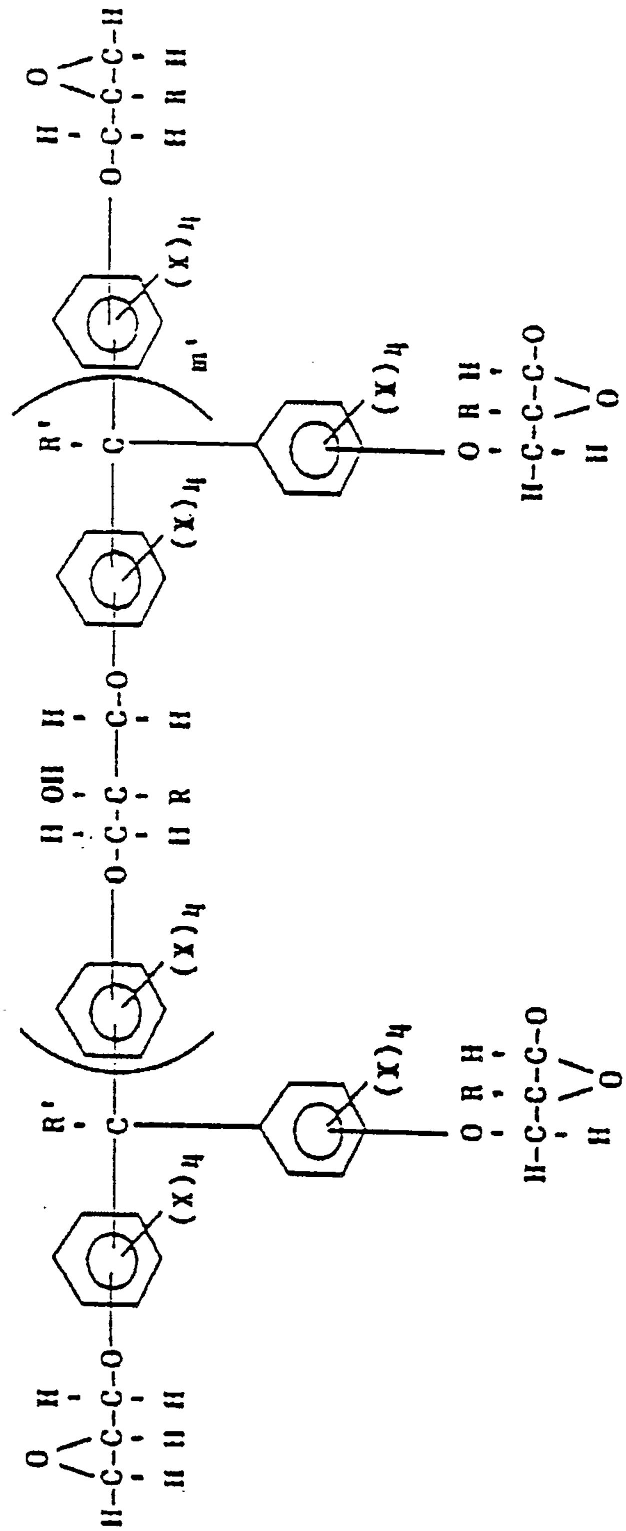

dans lesquelles chaque A représente indépendamment un groupe hydrocarboné bivalent comportant 1 à 10 atomes de carbone,

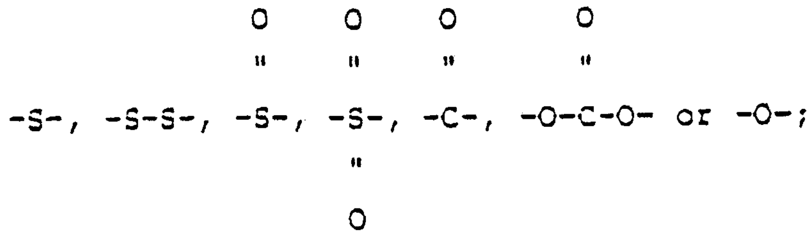

chaque A' est indépendamment un groupe hydrocarboné bivalent comportant 1 à 10 atomes de carbone, chaque R représente indépendamment l'hydrogène ou un groupe hydrocarboné comportant 1 à 4 atomes de carbone, R' représente l'hydrogène ou un groupe hydrocarboné comportant 1 à 10 atomes de carbone, chaque X représente indépendamment l'hydrogène, un halogène, un groupe hydrocarboné comportant 1 à 12 atomes de carbone, n vaut zéro ou 1, n' a une valeur moyenne de zéro à 15, m a une valeur moyenne de 0,001 à 6, et m' a une valeur moyenne de 0 à 4,

(ii) le composant (B) est un composé phénolique polyhydroxylé ou un mélange de composés de ce type, le ou les composé(s) étant représenté(s) par les formules (V), (VI), (VII) ou (VIII) suivantes :

Formule (V)

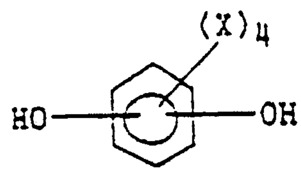

Formule (VI)

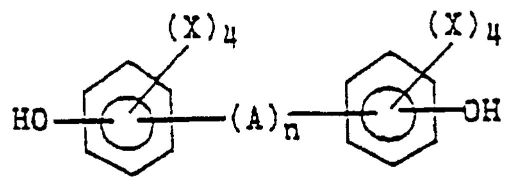

Formule (VII)

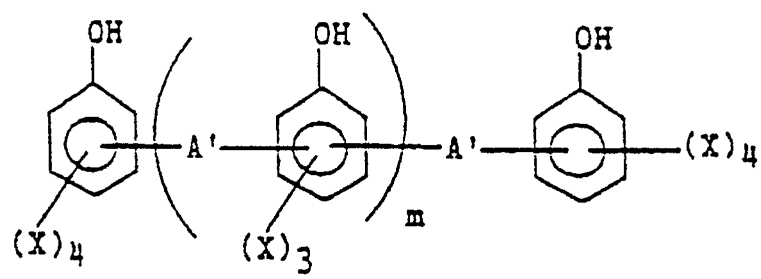

Formule (VIII)

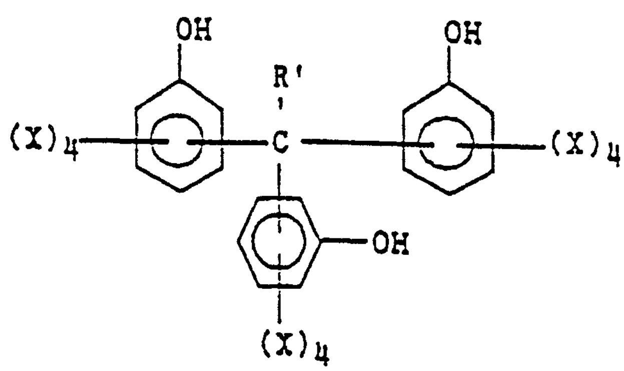

dans lesquelles A, A', R', X, n et m sont définis comme ci-dessus, et

(iii) le composant (C) est choisi parmi les composés phénoliques monohydroxylés représentés par la formule (IX) suivante :

Formule (IX)

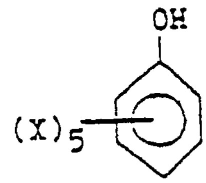

dans laquelle chaque X est défini comme ci-dessus, les alcools aliphatiques, les acides monocarboxyliques, l'eau, ou leurs combinaisons.

**5.** Composition de résine selon la revendication 4, dans laquelle :
(i) le composant (A) est constitué par une ou plusieurs résine(s) époxy représentée(s) par la formule (II) suivante :

Formule (II)

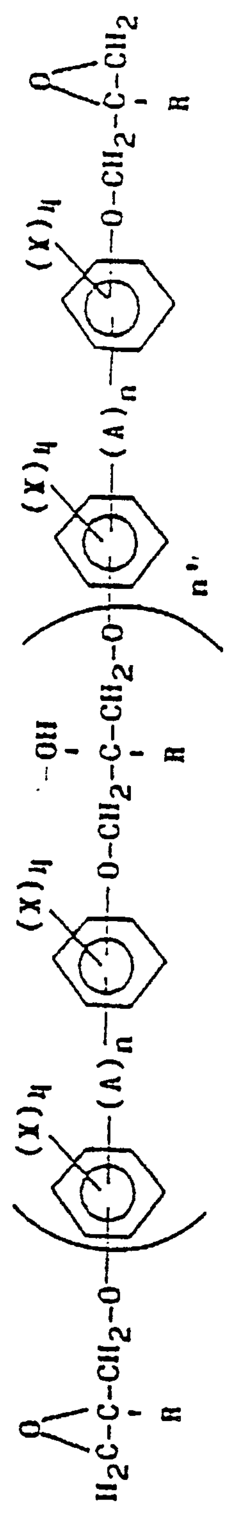

dans laquelle A est un groupe hydrocarboné bivalent comportant 1 à 10 atomes de carbone, chaque X représente l'hydrogène ou un atome d'halogène, n vaut 1 et n' a une valeur moyenne de 0,035 à 15,

(ii) le composant (B) est constitué par un ou plusieurs composé(s) phénolique(s) polyhydroxylé(s) représenté(s) par la formule (VI) suivante :

## Formule (VI)

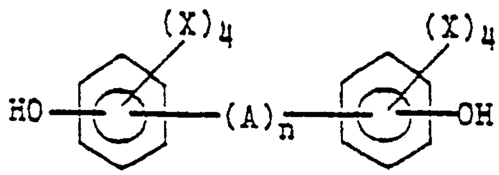

dans laquelle n, A et X sont définis comme dans la revendication 4, et
(iii) le composant (C) est choisi parmi le nonylphénol, l'alcool n-butylique, l'acide laurique, l'eau, ou leurs combinaisons.

**6.** Composition de résine selon la revendication 4, dans laquelle
(i) le composant (A) est un mélange de résines époxy dans lesquelles n vaut zéro ou 1 et n' a une valeur moyenne de 2 à 15,
(ii) le composant (B) est le bisphénol A, et
(iii) le composant (C) est le nonylphénol.

**7.** Formulation de peinture comprenant :
(A) une résine thermostable selon la revendication 1, et
(B) au moins un constituant pris parmi :
(1) un ou plusieurs pigment(s) ou colorant(s), et
(2) une ou plusieurs charge(s).

## Ansprüche

**1.** Thermisch stabiles, thermoplastisches Harz, hergestellt durch Umsetzen in Gegenwart einer wirksamen Menge eines geeigneten Katalysators von
(A) mindestens einem Epoxyharz mit im Mittel mehr als einer benachbarten Epoxygruppe pro Molekül,
(B) mindestens einem mehrwertigen Phenol und
(C) mindestens einem Verkappungsmittel für die Epoxygruppen aus Verbindungen, ausgewählt aus einwertigen Phenolen und Alkoholen, Monocarbonsäuren und Anhydriden derselben, aliphatischen und aromatischen sekundären Monoaminen, Monothiolen, Monoisocyanaten, Wasser und Mischungen derselben,
wobei Bestandteile (A), (B) und (C) in Mengen umgesetzt werden, die ein Äquivalentverhältnis von Bestandteil (B) zu Bestandteil (A) von 0,3:1 bis 0,95:1 und ein Äquivalentverhältnis von Bestandteil (C) zu Bestandteil (A) von 0,87:1 bis 1,1:1 ergeben und wobei das Äquivalentverhältnis der Bestandteile (B + C) zu Bestandteil (A) von 1,17:1 bis 1,96:1 beträgt.

**2.** Harzzusammensetzung nach Anspruch 1,
**dadurch gekennzeichnet, daß**
( i) die in Bestandteil (A) enthaltenen Epoxygruppen Glycidylethergruppen sind,
( ii) das Äquivalentverhältnis von Bestandteil (B) zu Bestandteil (A) von 0,3:1 bis 0,9:1 beträgt,
(iii) das Äquivalentverhältnis von Bestandteil (C) zu Bestandteil (A) von 0,93:1 bis 1,05:1 beträgt, und
( iv) das Äquivalentverhältnis von Bestandteilen (B + C) zu Bestandteil (A) von 1,23:1 bis 1,95:1 beträgt.

**3.** Harzzusammensetzung nach Anspruch 2,
**dadurch gekennzeichnet, daß**
( i) das Äquivalentverhältnis von Bestandteil (B) zu Bestandteil (A) von 0,45:1 bis 0,85:1 beträgt,
( ii) das Äquivalentverhältnis von Bestandteil (C) zu Bestandteil (A) von 0,95:1 bis 1:1 beträgt, und
(iii) das Äquivalentverhältnis der Bestandteile (B + C) zu Bestandteil (A) von 1,40:1 bis 1,85:1 beträgt.

4. Harzzusammensetzung nach Anspruch 1, **dadurch gekennzeichnet, daß**

( i) Bestandteil (A) ein Epoxyharz oder eine Mischung von Epoxyharzen der nachfolgenden Formeln (I), (II), (III) oder (IV) ist:

Formel (I)

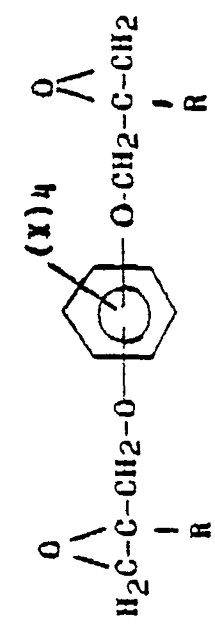

Formel (II)

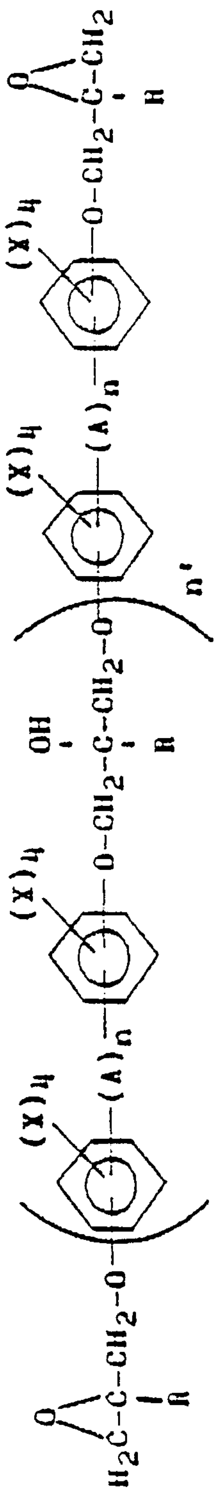

Formel (III)

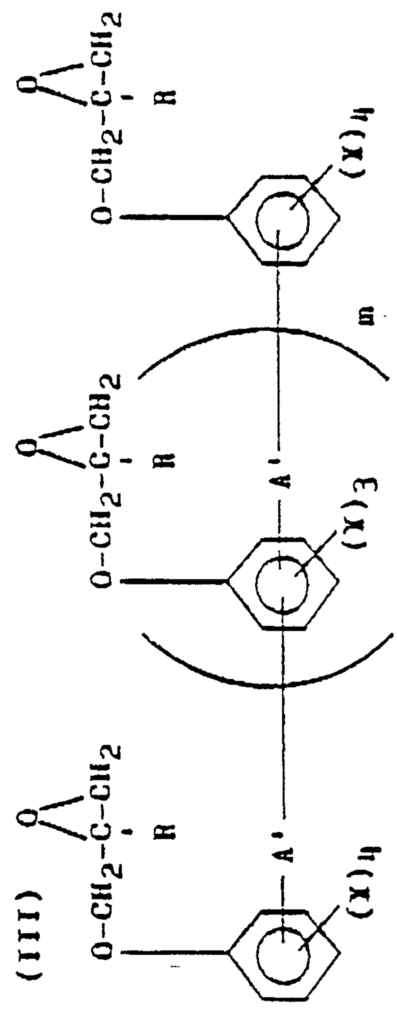

Formel (IV)

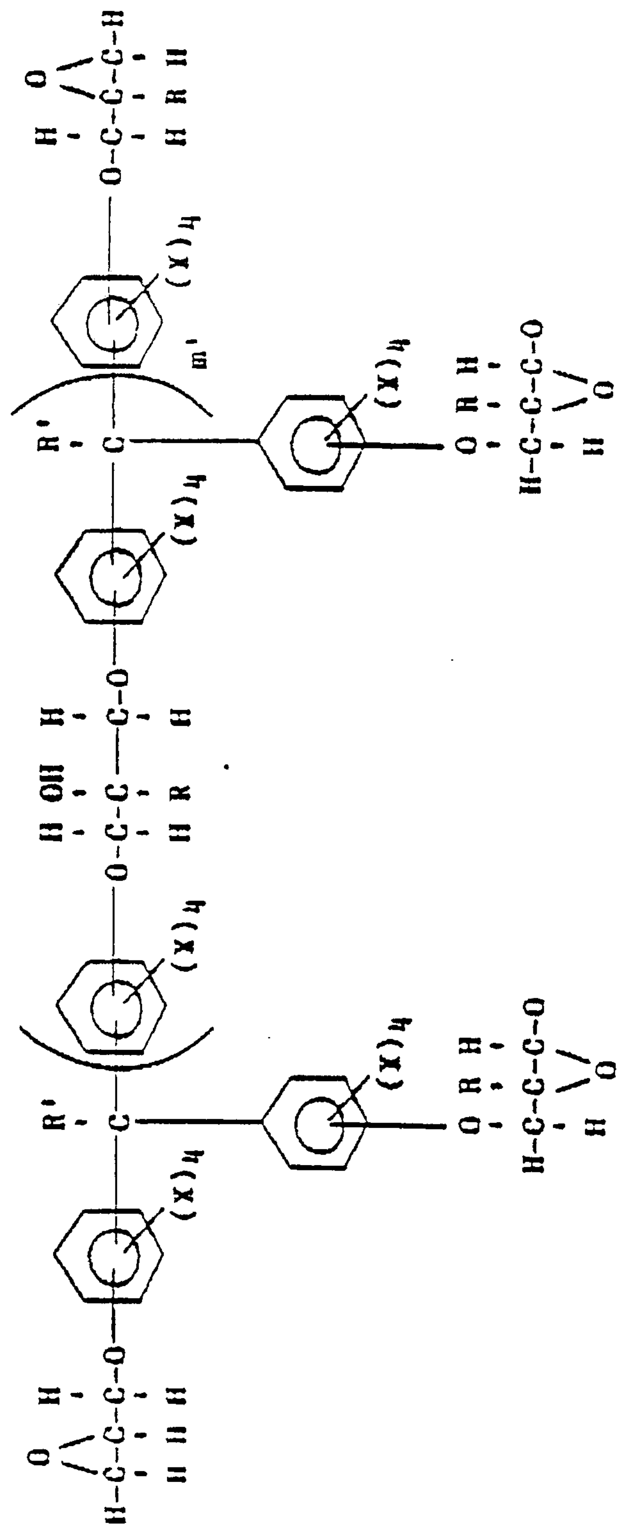

in denen jedes A unabhängig eine zweiwertige Kohlenwasserstoffgruppe mit 1 bis 10 Kohlenstoffatomen.

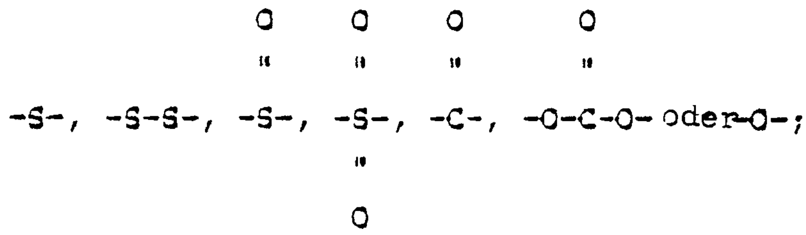

ist, jedes A' ist unabhängig eine zweiwertige Kohlenwasserstoffgruppe mit 1 bis 10 Kohlenstoffatomen, jedes R ist unabhängig Wasserstoff oder eine Kohlenwasserstoffgruppe mit 1 bis 4 Kohlenstoffatomen, R' ist Wasserstoff oder eine Kohlenwasserstoffgruppe mit 1 bis 10 Kohlenstoffatomen, jedes X ist unabhängig Wasserstoff, Halogen oder eine Kohlenwasserstoffgruppe mit 1 bis 12 Kohlenstoffatomen, n hat den Wert Null oder 1, n' hat einen Mittelwert von Null bis 15, m hat einen Mittelwert von 0,001 bis 6 und m' hat einen Mittelwert von 0 bis 4,

( ii) Bestandteil (B) ist eine mehrwertige Phenolverbindung oder Mischung von Verbindungen der nachfolgenden Formeln (V), (VI), (VII) oder (VIII):

Formel (V)

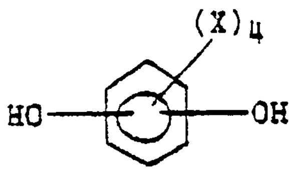

Formel (VI)

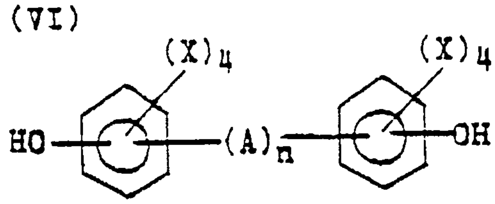

Formel (VII)

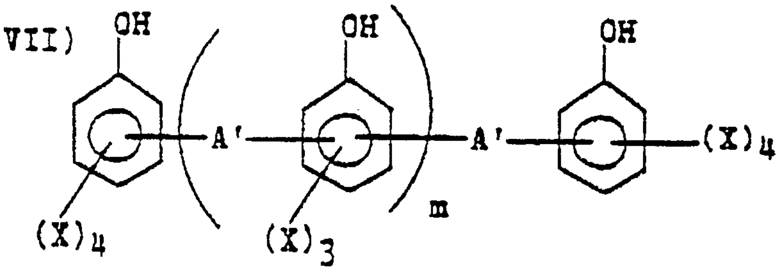

Formel (VIII)

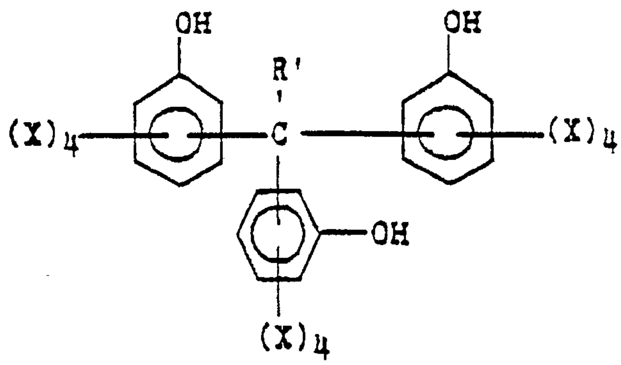

in denen A, A', R', X, n und m die zuvor angegebene Bedeutung haben, und
(iii) Bestandteil (C) aus einwertigen Phenolverbindungen der folgenden Formel (IX)

Formel (IX)

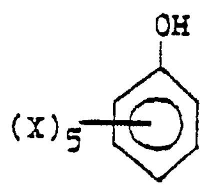

in der jedes X die zuvor angegebene Bedeutung hat, aliphatischen Alkoholen, Monocarbonsäuren, Wasser oder Mischungen derselben ausgewählt ist.

5. Harzzusammensetzung nach Anspruch 4,
**dadurch gekennzeichnet, daß**
( i) Bestandteil (A) ein oder mehrere Epoxyharz(e) der folgenden Formel (II) ist:

Formel (II)

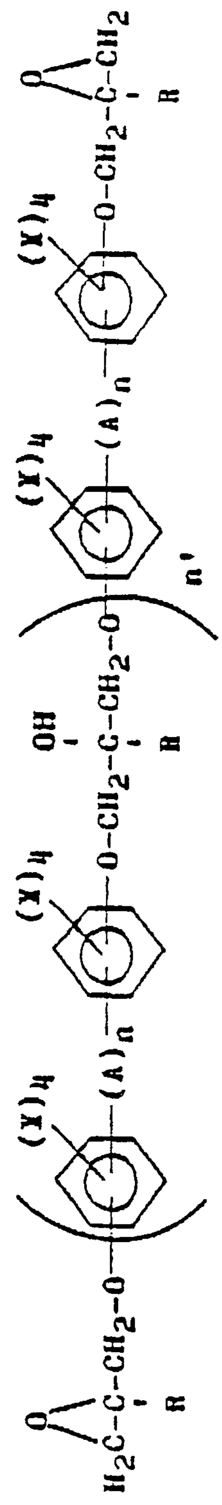

in der A eine zweiwertige Kohlenwasserstoffgruppe mit 1 bis 10 Kohlenstoffatomen ist, jedes X ist Wasserstoff oder ein Halogenatom, n hat einen Wert von 1 und n' hat einen Mittelwert von 0,035 bis 15,

( ii) Bestandteil (B) ist eine oder mehrere mehrwertige Phenolverbindung(en) der nachfolgenden Formel (V):

Formel (VI)

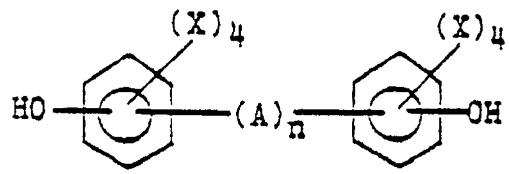

in der n, A und X die in Anspruch 4 angegebene Bedeutung haben, und
(iii) Bestandteil (C) aus Nonylphenol, n-Butylalkohol, Laurinsäure, Wasser oder Mischungen derselben ausgewählt ist.

6. Harzzusammensetzung nach Anspruch 4,
**dadurch gekennzeichnet, daß**
( i) Bestandteil (A) eine Mischung von Epoxyharzen ist, wobei n einen Wert von Null oder 1 hat und n' einen Mittelwert von 2 bis 15 hat,
( ii) Bestandteil (B) Bisphenol A ist und
(iii) Bestandteil (C) Nonylphenol ist.

7. Farbenformulierung enthaltend
(A) ein thermisch stabiles Harz nach Anspruch 1, und
(B) mindestens einen der Bestandteile
(1) ein oder mehrere Pigmente oder Farbstoffe und
(2) ein oder mehrere Füllstoffe.